(19) Europäisches Patentamt
European Patent Office
Office européen des brevets

(11) **EP 4 164 188 A1**

(12) **EUROPEAN PATENT APPLICATION**
published in accordance with Art. 153(4) EPC

(43) Date of publication:
**12.04.2023 Bulletin 2023/15**

(51) International Patent Classification (IPC):
**H04L 27/26** (2006.01)   **H04L 25/03** (2006.01)
**H04L 5/00** (2006.01)

(21) Application number: **21838424.6**

(22) Date of filing: **06.07.2021**

(52) Cooperative Patent Classification (CPC):
**H04L 5/00; H04L 25/03; H04L 27/26**

(86) International application number:
**PCT/KR2021/008550**

(87) International publication number:
**WO 2022/010218 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.07.2020   KR 20200084548**

(71) Applicant: **Samsung Electronics Co., Ltd.
Gyeonggi-do 16677 (KR)**

(72) Inventors:
• **AHN, Kwangjin**
  **Suwon-si Gyeonggi-do 16677 (KR)**
• **SHIM, Seijoon**
  **Suwon-si Gyeonggi-do 16677 (KR)**

(74) Representative: **Gulde & Partner
Patent- und Rechtsanwaltskanzlei mbB
Wallstraße 58/59
10179 Berlin (DE)**

(54) **METHOD AND DEVICE FOR REDUCING PEAK-TO-AVERAGE POWER RATIO IN ORTHOGONAL FREQUENCY DIVISION MULTIPLEXING MODULATION SYSTEM**

(57)    The present disclosure relates to a communication technique for merging IoT technology with a 5G communication system for supporting a data transmission rate higher than that of a 4G system, and a system therefor. The present disclosure is applied to intelligent services (e.g., smart homes, smart buildings, smart cities, smart cars or connected cars, healthcare, digital education, retail, security and safety-related services, and the like) on the basis of 5G communication technology and IoT-related technologies. The present disclosure present a method and a device for reducing a peak-to-average power ratio (PAPR) that is generated during MIMO-OFDM signal transmission in a mobile communication system.

START

CONFIRM LAYER INFORMATION AND CDM GROUP INFORMATION ~ 811

PERFORM PHASE ROTATION IN PDSCH-DMRS AND PDSCH ~ 812

TRANSMIT DMRS AND PDSCH ~ 813

END

FIG. 8A

EP 4 164 188 A1

**Description**

**[Technical Field]**

The present disclosure relates to a method and device for reducing a Peak to Average Power Ratio (PARR) that may occur when transmitting a MIMO-OFDM signal in a mobile communication system.

**[Background Art]**

Efforts are being made to develop an improved 5G communication system or a pre-5G communication system in order to meet the increasing demand for wireless data traffic after the commercialization of a 4G communication system. For this reason, the 5G communication system or the pre-5G communication system is called a communication system after the 4G network (Beyond 4G Network) or system after the LTE system (Post LTE). In order to achieve a high data rate, the 5G communication system is being considered for implementation in a super high frequency(mmWave) band (e.g., such as a 60 giga (60 GHz) band). In order to alleviate the path loss of radio waves in the super high frequency band and increase the transmission distance of radio waves, in the 5G communication system, beamforming, massive MIMO, Full Dimensional MIMO: FD-MIMO, array antenna, analog beam-forming, and large scale antenna technologies are being discussed. In addition, in order to improve the network of the system, in the 5G communication system, technologies such as evolved small cell, advanced small cell, cloud radio access network: cloud RAN, ultra-dense network, Device to Device communication: D2D, wireless backhaul, moving network, cooperative communication, Coordinated Multi-Points, interference cancellation, etc. are being developed. In addition, in 5G system, Advanced Coding Modulation (ACM) methods such as Hybrid FSK and QAM Modulation (FQAM) and Sliding Window Superposition Coding (SWSC), advanced connection technologies such as Filter Bank Multi Carrier (FBMC), non-orthogonal multiple access (NOMA), and sparse code multiple access (SCMA), etc. are being developed.

Meanwhile, the Internet is evolving from a human-centered network in which humans generate and consume information to an Internet of Things (IoT) network that exchanges and processes information between distributed components such as objects. Internet of Everything (IoE) technology, which combines Big-data processing technology through connection with cloud servers, etc. with IoT technology, is also emerging. Technology elements such as sensing technology, wired and wireless communication and network infrastructure, service interface technology, and security technology are required to implement IoT, and recently, technologies such as sensor network, machine to machine (M2M), and machine type communication (MTC) for connection between objects have been studied. In an IoT environment, intelligent IT (Internet Technology) services that create new values in human life by collecting and analyzing data generated from connected objects may be provided. IoT may be applied to field such as smart home, smart building, smart city, smart car or connected car, smart grid, health care, smart home appliance, and advanced medical service, etc. through convergence and combination between existing IT (information technology) technologies and various industries.

Accordingly, various attempts are being made to apply the 5G communication system to the IoT network. For example, technologies such as sensor network, Machine to Machine (M2M), and Machine Type Communication (MTC) are being implemented by 5G communication techniques such as beamforming, MIMO, and array antenna. The application of cloud wireless access network (cloud RAN) as a big data processing technology described above may be an example of the convergence of 5G technology and IoT technology.

In order for a terminal to estimate a channel in a wireless communication system, a base station must transmit a reference signal for this. The terminal may perform channel estimation using the reference signal and demodulate a received signal. In addition, the terminal may also grasp the channel state through the reference signal and use it to feedback it to the base station. Unlike LTE system, in 5G wireless communication, not only increased orthogonal DMRS antenna ports, increased Cell-ID, increased channel bandwidth, various subcarrier spacing support, slot-based transmission and slot aggregation support, DMRS bundling over time, but also configurable DMRS structure support is being considered. When supporting these various features, a method in which the base station generates DMRS and transmits information about it to the terminal may be different from that of the existing LTE system.

**[Disclosure]**

**[Technical Problem]**

The present disclosure proposes a method of reducing PAPR generated when transmitting DMRS signal in an Orthogoanl Frequency Division Multiplexing (OFDM) mobile communication system. More specifically, the present disclosure discloses a method of reducing PAPR of a DMRS signal without using a plurality of DMRS sequences.

**[Technical Solution]**

A method of a base station in a wireless communication system according to an embodiment of the present invention for solving the above problems may comprise identifying, layer information to which a physical downlink shared channel (PDSCH) for transmission to at least one terminal is mapped and code division multiplexing (CDM) group information; applying, based on the layer information and the CDM group information, a phase rotation to a demodulation reference signal (DMRS) for the PDSCH; and transmitting, the DMRS to which the phase rotation is applied to the at least one terminal.

In a wireless communication system according to an embodiment of the present invention, a base station may comprise a transceiver for transmitting and receiving a signal; and a control unit connected to the transceiver, and wherein the control unit may be configured to identify layer information to which a physical downlink shared channel (PDSCH) for transmission to at least one terminal is mapped and code division multiplexing (CDM) group information; apply based on the layer information and the CDM group information, a phase rotation to a demodulation reference signal (DMRS) for the PDSCH; and transmit the DMRS to which the phase rotation is applied to the at least one terminal.

A method of a terminal in a wireless communication system according to an embodiment of the present invention may comprise receiving, a demodulation reference signal (DMRS) information for a physical downlink shared channel (PDSCH) from a base station; identifying, based on the received DMRS information, a DMRS to be received; and receiving the identified DMRS from the base station, and wherein the DMRS may be configured to apply a phase rotation to each of a plurality of CDM group, based on layer information to which the PDSCH is mapped and code division multiplexing (CDM) group information.

In a wireless communication system according to an embodiment of the present invention, a terminal may comprise a transceiver for transmitting and receiving a signal; and a control unit connected to the transceiver, and wherein the control unit may be configured to receive a demodulation reference signal (DMRS) information for a physical downlink shared channel (PDSCH) from a base station; identify based on the received DMRS information, a DMRS to be received; and receive the identified DMRS from the base station, and wherein the DMRS may be configured to apply a phase rotation to each of a plurality of CDM group, based on layer information to which the PDSCH is mapped and code division multiplexing (CDM) group information.

**[Advantageous Effects]**

Efficient transmission of radio resources is possible by performing effective generation and processing of DMRS signals through the present disclosure.

**[Description of the Drawings]**

FIG. 1 is a diagram illustrating a basic structure of a time-frequency region that is a radio resource region in which data or a control channel is transmitted in a 5G system.
FIG. 2 is a diagram illustrating radio resources of 1 subframe or slot and 1 resource block (RB), which are the minimum units that may be scheduled as downlink in the mobile communication system of the present disclosure.
FIG. 3 is a diagram illustrating a structure of a PDSCH-DMRS transmitted to a PDSCH.
FIG. 4 is a diagram illustrating a PAPR increased due to precoding in case that one sequence is used for a DMRS signal for PDSCH in 4-layer transmission.
FIG. 5 is a diagram illustrating a CCDF (Complementary Cumulative Distribution Function) result confirmed by simulating PAPR increased by precoding in 4-layer transmission.
FIG. 6 is a diagram illustrating a case in which different sequences for each CDM group are used in a DMRS signal for PDSCH according to an embodiment of the present disclosure.
FIG. 7 is a block diagram illustrating a transmission channel processing process for preventing an increase in PAPR performed in a base station according to an embodiment of the present disclosure.
FIGS. 8A and 8B are flowcharts illustrating a method for PAPR reduction processing.
FIG. 9 is a diagram illustrating a case in which phase rotation is applied in sub-block units to a DMRS signal for a PDSCH in 4-layer transmission according to an embodiment of the present disclosure.
FIG. 10 is a diagram illustrating a case in which a plurality of PDSCHs are frequency division multiplexed (FDM) according to an embodiment of the present disclosure.
FIG. 11 is a diagram illustrating a case in which a mini-slot is applied in transmission of a PDSCH according to an embodiment of the present disclosure.
FIG. 12 is a diagram illustrating a simulation result in which a PAPR reduction technique according to the present disclosure is applied in a case of 4-layer transmission.

FIG. 13 is a flowchart illustrating a method for a terminal to receive an OFDM DMRS signal to which PAPR reduction is applied according to an embodiment of the present disclosure.

FIG. 14 is a block diagram illustrating an internal structure of a terminal according to an embodiment of the present disclosure.

FIG. 15 is a block diagram illustrating an internal structure of a base station according to an embodiment of the present disclosure.

**[Mode for Invention]**

Wireless communication system is moving away from providing early voice-oriented services, and is developing into a broadband wireless communication system that provides packet data service of high-speed and high-quality, for example, like a communication standard such as High Speed Packet Access (HSPA) of 3GPP, Long Term Evolution (LTE) or Evolved Universal Terrestrial Radio Access (E-UTRA), LTE-Advanced (LTE-A), High Rate Packet Data (HRPD) of 3GPP2, Ultra Mobile Broadband (UMB), 802.16e of IEEE, and the like. In addition, a communication standard of 5G or NR (new radio) is being made as a 5G wireless communication system.

As a representative example of the broadband wireless communication system, in the LTE/LTE-A system, an Orthogonal Frequency Division Multiplexing (OFDM) method is adopted in the Downlink (DL), and the Single Carrier Frequency Division Multiple Access (SC-FDMA) method is adopted in the Uplink (UL). The uplink refers to a radio link in which a terminal (user equipment (UE) or mobile station (MS)) transmits data or control signals to a base station (eNode B, or base station (BS)), and the downlink refers to a radio link through which the base station transmits data or control signals to the terminal. The multiple access method as described above distinguishes each user's data or control information by allocating and operating in order not to overlap the time-frequency resources to which data or control information is usually transmitted for each user, in other words for orthogonality to be established.

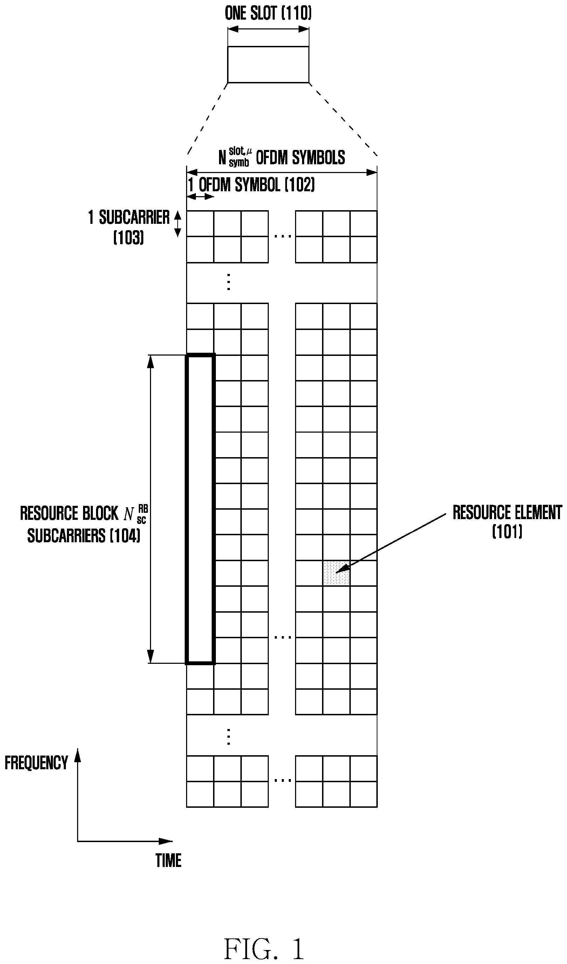

FIG. 1 is a diagram illustrating a basic structure of a time-frequency region that is a radio resource region in which data or a control channel is transmitted in a 5G system.

Referring to FIG. 1, in FIG. 1, a horizontal axis represents a time region, and a vertical axis represents a frequency region. A basic unit of a resource in the time and frequency region is a Resource Element (RE) 101 and may be defined as 1 Orthogonal Frequency Division Multiplexing (OFDM) symbol 102 on the time domain and 1 Subcarrier 103 on the frequency domain. In the frequency region, $N_{sc}^{RB}$ (e.g., 12) consecutive REs may configure one Resource Block (RB) 104.

Looking at the time resource, 1 frame may be defined as 10ms. 1 subframe may be defined as 1ms, and thus 1 frame may be configured with a total of 10 subframes. 1 slot 110 may be defined as 14 OFDM symbols (i.e., number of symbols per 1 slot $(N_{symb}^{slot}) = 14$). 1 subframe (not illustrated) may be configured with one or numbers of slots, and the number of slots per 1 subframe may vary depending on a setting value $\mu$ for a subcarrier spacing. In case of $\mu=0$, 1 subframe may be configured with 1 slot, and in case of $\mu=1$, 1 subframe may be configured with 2 slots. In other words, the number of slots per 1 subframe may vary depending on the set value $\mu$ for the subcarrier spacing, and depending on this, the number of slots per 1 frame may vary. $N_{slot}^{subframe,\mu}$ and $N_{slot}^{frame,\mu}$ depending on each subcarrier spacing setting $\mu$ may be defined as illustrated in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

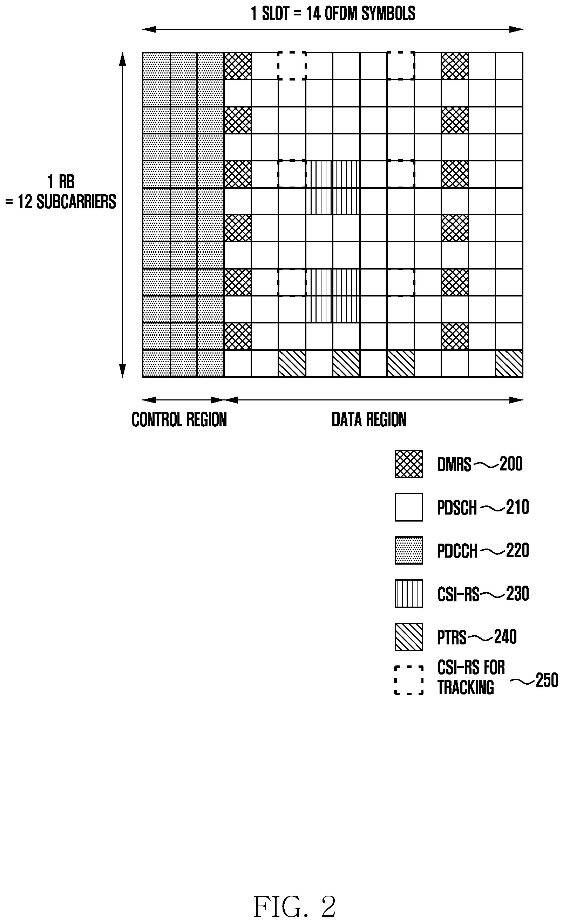

In NR, it is possible that one component carrier (CC) or serving cell is configured with up to 250 or more RBs. Therefore, in case that the terminal always receives the entire serving cell bandwidth, such as LTE, the power consumption of the terminal may be severe, and in order to solve this problem, it is possible for the base station to set one or more bandwidth parts (BWP) to the terminal to support the terminal to change a reception area in a cell. In NR, the base station may set 'initial BWP', which is the bandwidth of CORESET #0 (or common search space, CSS), to the terminal through the MIB. Thereafter, the base station sets the initial BWP (first BWP) of the terminal through RRC signaling, and may notify at least one or more BWP setting information that may be indicated through downlink control information (DCI) in the future. Thereafter, the base station may indicate which band the terminal will use by notifying the BWP ID through the DCI. When the terminal does not receive DCI in the currently allocated BWP for a specific time or longer, the terminal may attempt to receive DCI by returning to the 'default BWP'. FIG. 2 is a diagram illustrating radio resources of 1 subframe or slot and 1 resource block (RB), which are the minimum units that may be scheduled as downlink in the mobile communication system of the present disclosure.

The radio resource illustrated in FIG. 2 may be configured with one subframe (or this may be referred to as a slot) on the time domain, and may be configured with one RB on the frequency domain. Such a radio resource may be configured with 12 subcarriers (subcarrier, this may be used interchangeably with sub-carrier) in the frequency region and may be configured with 14 OFDM symbols in the time region to have a total of 168 unique frequencies and time positions. In NR, like LTE and LTE-A, each unique frequency and time position of the FIG. 2 may be referred to as a resource element RE.

A plurality of different types of signals as follows may be transmitted to the radio resource illustrated in the FIG. 2.

1. Demodulation Reference Signal (DMRS) 200: A reference signal transmitted for a specific terminal and may be transmitted only in case that data is transmitted to the terminal. In the LTE-A system, DMRS may be configured with a total of 8 DMRS antenna ports (antenna port, hereinafter may be used interchangeably with port). In LTE-A, port 7 to port 14 correspond to DMRS ports, and ports may maintain orthogonality so as not to cause interference with each other by using code division multiplexing (CDM) or frequency division multiplexing (FDM).

2. Physical Downlink Shared Channel (PDSCH) 210: It is a data channel transmitted to a downlink, which is used by a base station to transmit traffic to a terminal and may be transmitted by using RE in which a reference signal is not transmitted in the data region of the FIG. 1.

3. Physical Downlink Control Channel (PDCCH) 220: It is a control channel transmitted to a downlink, and a channel for the base station to indicate to the terminal various control information such as resource allocation, modulation and coding scheme (MCS), redundancy version (RV), precoding resource block group (PRG), etc. for scheduling a PDSCH or a PUSCH (Physical Uplink Shared Channel).

4. Channel state Information Reference Signal (CSI-RS) 230: It is a reference signal transmitted for terminals belonging to one cell, and is used to measure a channel state. A plurality of CSI-RSs may be transmitted to one cell. In LTE, it was transmitted from a preset time and frequency resource using a fixed pattern of a specific position, whereas in NR, it may be synthesized and used at free time and frequency position based on (2,1), (2,2), and (4,1) unit RE patterns based on frequency and time.

5. Phase Tracking Reference Signal (PTRS) 240: It is mainly a reference signal for estimating rapidly changing phases in a high frequency band of 6 GHz or more (e.g., 28 GHz), position off-set and density are possible to be set, and the use of the corresponding PTRS may be indirectly dynamically indicated using MCS.

6. CSI-RS for tracking 250: According to the absence of a Cell Specific RS (CRS) supported by LTE, according to the insufficient reference signal to synchronize time and frequency other than the Synchronization Signal Block (SSB) and Physical Broadcast Channel (PBCH) DMRS, RS for this synchronization may be additionally allocated. Specifically, based on the CSI-RS, whether the CSI-RS is used for tracking in the CSI-RS set may be set as RRC.

In case of DMRS in the signal, the following DMRS information may be transmitted through the DCI.

- DMRS port(s)
- Number of DMRS CDM group(s) without data
- Number of front-load symbol

A recent 5G NR mobile communication system also applies the MIMO-OFDM method. In the 5G NR system, downlink data information is transmitted through a Physical Downlink Shared Channel (PDSCH), and a Demodulation Reference Signal (DMRS) and data are transmitted together. For higher throughput, transmission of up to 8 layers is possible, and different DMRS signals may be allocated to each layer.

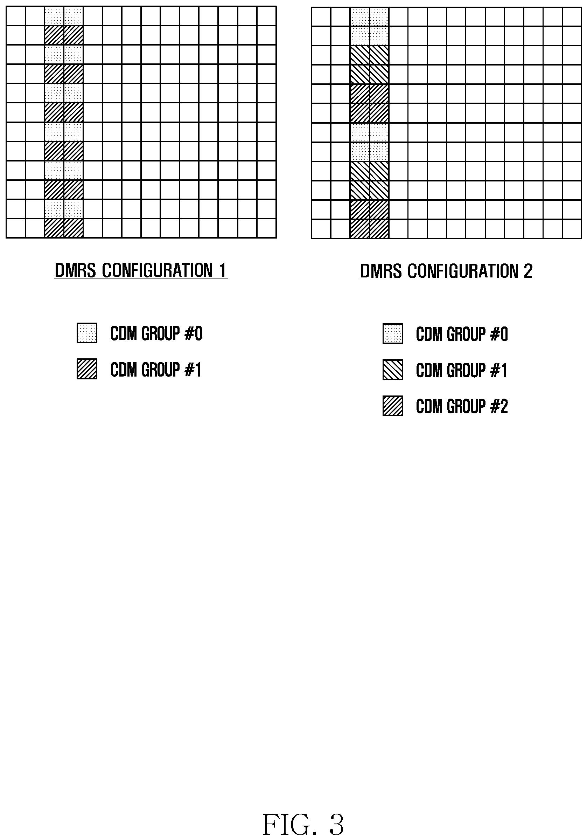

FIG. 3 is a diagram illustrating a structure of a PDSCH-DMRS transmitted to a PDSCH.

Referring to FIG. 3, DMRS for the PDSCH may be mapped to a frequency axis and a time axis resource using one sequence for each user. In case that only one OFDM symbol is used for DMRS, two DMRS ports use the same resource on the frequency axis, and may be allocated to one CDM group divided by an Orthogonal Cover Code (OCC) which is length 2. Since OCC is applied in units of symbols in case that 2 OFDM symbols are used for DMRS, four DMRS ports may be allocated to one CDM group.

DMRS may have two configurations according to the frequency axis resource allocation method and may be divided into up to 12 ports. In the Type 1 method (configuration 1), up to four orthogonal RSs may be put into one DM-RS symbol, and up to eight orthogonal RSs may be put into two DM-RS symbols. In case of Type 2 (configuration 2), a maximum of 6 per one symbol and a maximum of 12 per two symbols may be supported.

A problem of being increased Peak to Average Power Ratio(PAPR) occurs, in case that precoding to maximize channel capacity is applied during MIMO transmission because DMRS ports are divided by using these frequency axis, time axis, and code division, but the sequence is one per user.

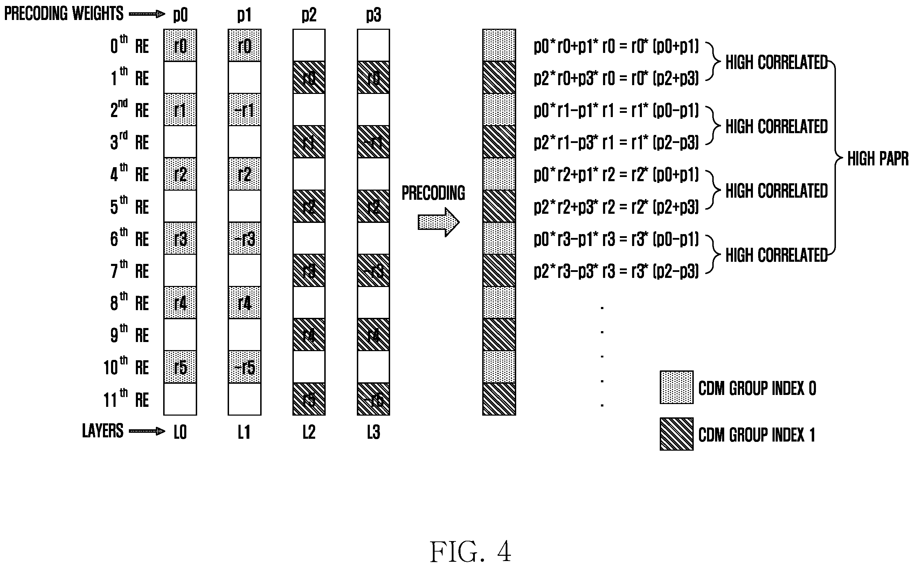

FIG. 4 is a diagram illustrating a PAPR increased due to precoding in case that one sequence is used for a DMRS signal for PDSCH in 4-layer transmission.

In the example shown in FIG. 4, in case that only one OFDM symbol is set as DMRS configuration 1 (Type 1) and rank 4 transmission, 4 DMRS ports corresponding to 2 CDM groups may be allocated to each layer. Looking at the DMRS signals allocated to the frequency axis for each layer, in case of the first layer indicated by L0, before precoding, one DMRS sequence r0, r1, r2, ... etc. corresponding to one CDM group are assigned to every even-numbered RE, and no signal is transmitted to odd-numbered REs corresponding to other CDM groups. Similarly, in case of other layers, DMRS signals are allocated only in a different mapping method on the frequency axis using the same DMRS sequence r0, r1, r2, ..., and signals corresponding to different DMRS ports are not transmitted together. However, DMRS signals of other CDM groups belonging to other layers may be added in addition to the DMRS signals originally allocated for each layer through the precoding process. Observing the frequency axis resources after precoding, it can be seen that DMRS sequence r0, r1, r2, ... are repeated for each RE. Although different precoding weights are repeated in a multiplied form, the PAPR increases through the OFDM signal generation process because it is repeated in a form with high correlation over the entire frequency band.

The DMRS sequence r(n) used in this case is a complex number with size and phase, and may be a complex number sequence generated by corresponding a sequence to each of a real part and an imaginary part through IQ parameters.

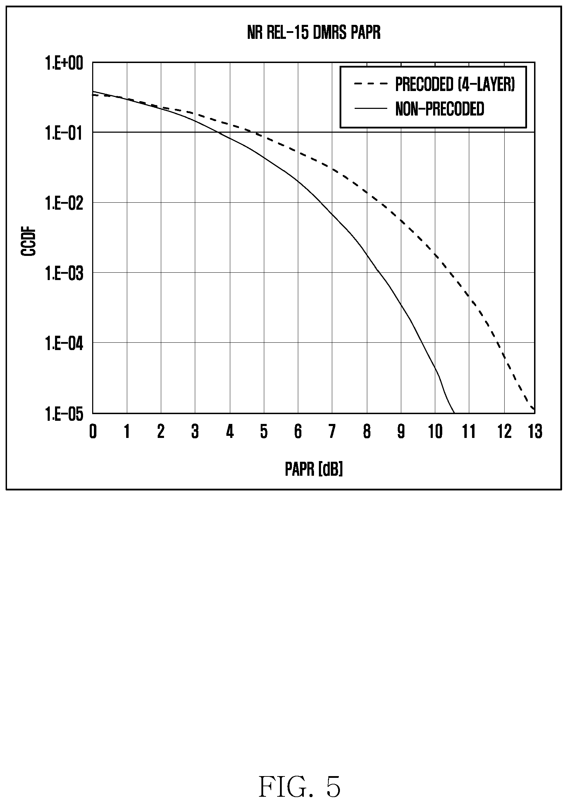

FIG. 5 is a diagram illustrating a CCDF (Complementary Cumulative Distribution Function) result confirmed by simulating PAPR increased by precoding in 4-layer transmission.

In FIG. 5, a black solid line is a PAPR result in case that transmission is performed without performing precoding, and a dotted line illustrates a PAPR result in case that precoding is performed. According to the two graphs illustrated in FIG. 5, as described above, it may be confirmed that the DMRS signal for PDSCH increases the PAPR through the precoding process, and it may be confirmed that the PAPR increases by about 2dB based on a 0.01% (10-4) probability standard.

The present disclosure discloses a method for supplementing the PAPR increase problem due to the precoding of the DMRS for the PDSCH.

According to an embodiment of the present disclosure, it is possible to prevent an increase in PAPR by generating a plurality of different sequences for each CDM group instead of one sequence for DMRS per user.

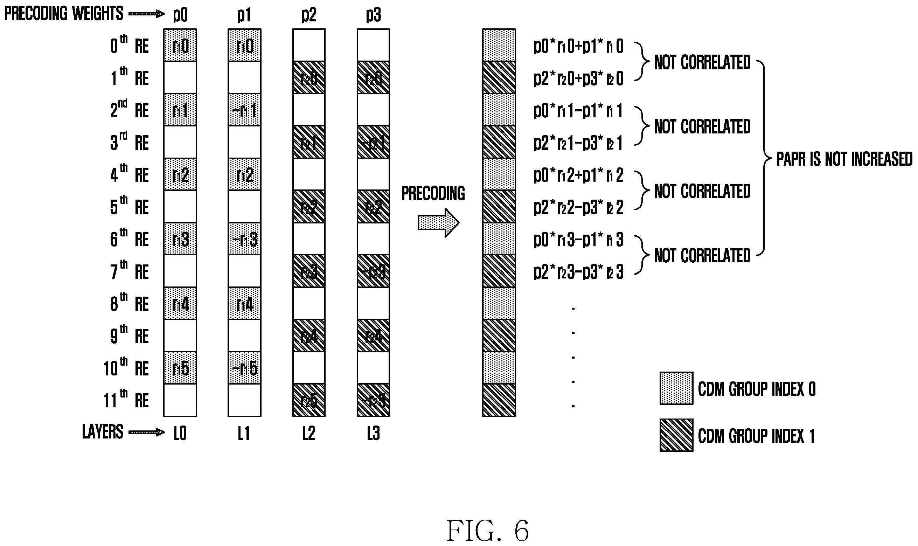

FIG. 6 is a diagram illustrating a case in which different sequences for each CDM group are used in a DMRS signal for PDSCH according to an embodiment of the present disclosure.

As can be seen in FIG. 6, in case that different DMRS sequences are used in different CDM groups, since they are different sequences without correlation even if they are repeated on the frequency axis through the precoding process, it is possible to obtain an effect in which PAPR does not further increase even after generating an OFDM signal through an effect such as repetition of a random signal.

Another embodiment of the present disclosure discloses a method for preventing an increase in PAPR without using a different sequence for each CDM group. In other words, in order to prevent an increase in signaling or operation that may occur due to the use of a plurality of sequences, a method that may prevent an increase in PAPR is disclosed even when one sequence for each user is used as in the existing method.

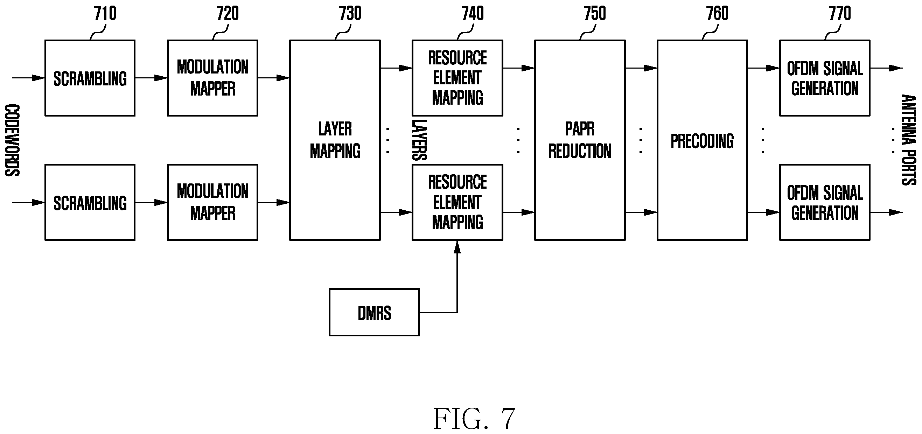

FIG. 7 is a block diagram illustrating a transmission channel processing process for preventing an increase in PAPR performed in a base station according to an embodiment of the present disclosure.

When the physical layer (PHY layer) receives transmission blocks for signals to be transmitted from the medium access control (MAC) layer, LDPC encoding for error correction and CRC addition for error detection are performed on each transmission block. Thereafter, the coded bit is scrambled 710, input to the modulator, converted into a modulation symbol 720, mapped to each layer 730, and then a resource element (RE) is mapped 740. Thereafter, the OFDM signal generated through precoding 760 is transmitted through the antenna port 770.

According to the present disclosure, when an RE is mapped to a layer before the precoding step, the PAPR of a signal to be transmitted may be lowered through a PAPR reduction step 750 to the mapped RE. The PAPR reduction step 750 does not necessarily have to be performed after mapping of RE and before precoding. For example, it is also possible to perform in the step immediately after precoding, and it is also possible that reduction processing is processed together simultaneously with mapping in the RE mapping step 740. In addition, it may be possible to perform processing for reduction in advance before RE mapping using RB index information to which a signal is mapped.

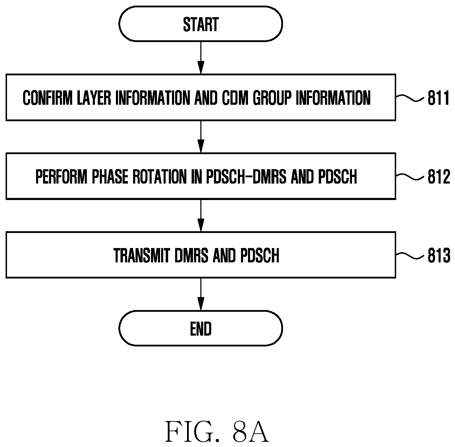

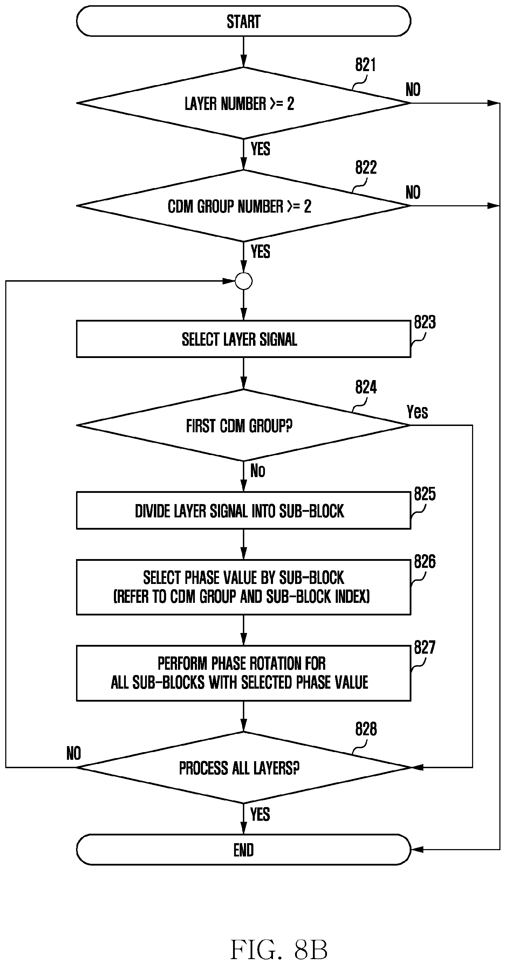

Hereinafter, a specific method for PAPR reduction processing according to the present disclosure will be described with reference to FIG. 8.

FIGS. 8A and 8B are flowcharts illustrating a method for PAPR reduction processing.

Referring to FIG. 8A, for PAPR reduction processing, the base station may confirm information on a layer and a CDM group in which DMRS for PDSCH transmitted to at least one or more terminal is transmitted 811.

Thereafter, the base station may apply phase rotation to the DMRS for the PDSCH and the PDSCH based on the confirmed information 812. Here, the phase rotation applied to DMRS is an operation of rotating as much as specific phase on a complex plane with respect to DMRS sequence that may be expressed in complex numbers, and more specifically, may refer to the phase rotation in which rotated as much as specific phase $\Theta$ with respect to a DMRS sequence $n(r)$ may refer to an operation of obtaining $n(r)e^{j\theta}$ by multiplying $e^{j\theta}$. In this case, the phase rotation applied to the DMRS may apply different phase values to each of a plurality of CDM groups.

Thereafter, the base station may map the DMRS in which the PAPR is reduced by applying the phase rotation and the related PDSCH to the RE of each layer through precoding and OFDM signal generation, and may transmit them to at least one or more terminals 813.

FIG. 8B is a diagram illustrating the method of FIG. 8A in more detail.

Referring to FIG. 8B, in step 811 of FIG. 8A, first, by confirming the information of the PDSCH signal to be transmitted, it is possible to confirm whether rank 2 or more, that is, whether the number of layers is 2 or more (821, condition 1). In case that the number of layers is 2 or more, it is confirmed whether DMRS ports corresponding to different CDM groups are allocated. More specifically, the base station may confirm whether the number of CDM groups is 2 or more (822 condition 2). This is because the increase in PAPR is not a big problem in case that the layer is 1 or only one CDM group is used. Therefore, in case that the number of layers is one or the number of CDM groups is one, it may immediately move on to the precoding step 760.

In step 812 of FIG. 8A, the base station may determine that PAPR reduction should be processed in case that the number of CDM groups is 2 or more, and may apply the phase rotation by applying different phase values to the remaining CDM groups except for the first CDM group. More specifically, it is possible to first select a layer signal 823, and confirm whether the corresponding layer corresponds to the first CDM group 824. When it is not the first CDM group, the phase rotation may be applied. The phase rotation may not be applied to the first CDM group. If the number of CDM groups is 3, the phase rotation may not be applied to the first CDM group, and the phase rotation may be applied to the second CDM group and the third CDM group using different phase values (or offsets).

Thereafter, in case that the phase rotation is applied for each layer, the signal on each layer may be divided into sub-block units on the frequency axis 825. Through this, by applying a different phase to each sub-block, it is possible to prevent an increase in PAPR of a signal transmitted in the entire frequency band.

Different phase values to be applied to each sub-block may be obtained 826. In this case, different phase values determined for each sub-block may be predetermined as multiple of a specific value (offset). In other words, the phase value may be a value that increases by a constant offset for each sub-block that divides the entire frequency band by at least Precoding Resource Block Group (PRG) units. The offset value is an arbitrary value between 0 degrees and 360 degrees, and may be a value different for each CDM group. In addition, in case that the PDSCH signal is transmitted over several symbol intervals, the same phase rotation method may be applied to all symbol intervals. The phase value to be applied to each sub-block of each CDM group may be implemented more simply by using a predetermined value through simulation, etc.

Based on the different phase values confirmed above, the phase rotation may be applied to all REs belonging to each sub-block 827. By repeating the above operation, the phase rotation may be applied to all signals for all layers 828.

Hereinafter, a specific method of applying the phase rotation will be described.

As described above, since PAPR increases after OFDM signal generation due to the problem that DMRS signals corresponding to different CDM groups are repeated on the frequency axis by precoding, when transmitting PDSCH, the phase rotation may be applied only in case that precoding is performed at rank 2 or more (condition 1) and in case that DMRS ports corresponding to different CDM groups are allocated (condition 2). The phase rotation may be applied only to the remaining CDM groups except for the first CDM group. In case that all of 2 DMRS signals corresponding to one CDM group are used, phase rotation may be applied by selecting the same phase value for two layers including the corresponding DMRS signal. In other words, the same phase rotation may be applied to two layers divided by the frequency axis OCC.

The phase value used for phase rotation may have a value that is constantly increased in units of sub-blocks divided on the frequency axis. The sub-block may be divided into PRG units or units of multiple of PRG in advance so as not to degrade reception performance. In addition, instead of dividing sub-blocks limited to the frequency region in which each PDSCH is transmitted, the frequency region corresponding to the entire carrier bandwidth may be divided into sub-blocks in units of multiple of the PRG. The same phase value is applied within one sub-block, and phase rotation may be performed with the phase value increased by an offset in the next sub-block. The offset value is an arbitrary value between 0 degrees and 360 degrees, and is set to a different value for each CDM group. Particularly, the phase rotation operations may be implemented more easily by using offset values in units of 90 degrees. The phase values applied in units of the sub-blocks described above may be summarized in the form illustrated in Table 2 below.

[Table 2]

| | | CDM group | | |
|---|---|---|---|---|
| | | 1st | 2nd | 3rd |
| offset | | N/A | $\theta_1$ | $\theta_2$ |
| sub-block index | RB index | | | |
| 0 | 0 ~ k-1 | N/A | A | B |
| 1 | k ~ 2k-1 | N/A | $A + \theta_1$ | $B + \theta_2$ |
| 2 | 2k ~ 3k-1 | N/A | $A + 2\theta_1$ | $B + 2\theta_2$ |
| 3 | 3k ~ 4k-1 | N/A | $A + 3\theta_1$ | $B + 3\theta_2$ |
| ... | | N/A | | |
| $\left\lceil \dfrac{M}{k} \right\rceil - 1$ | $\left\lfloor \dfrac{M}{k} \right\rfloor k$ ~ M-1 | N/A | $A + \left\lfloor \dfrac{M}{k} \right\rfloor \theta_1$ | $B + \left\lfloor \dfrac{M}{k} \right\rfloor \theta_2$ |

The contents illustrated in Table 2 above are examples of dividing sub-blocks in units of k RBs for carrier bandwidth having M RB resources. The value of k may be set to a value smaller than M such that the number of divided sub-blocks is 2 or more while being units of multiple of the PRG. Although most sub-blocks are configured with k RB units, the last sub-block may be configured with only RBs smaller than k in case that M value is not a multiple of k. The phase rotation may be performed by applying a phase corresponding to each sub-block to all layer signals corresponding to the second and third CDM groups except for the first CDM group. The values expressed as A and B refer to the initial phase values that may be had in the first sub-block, and may have values between 0 degrees and 360 degrees, including 0 degrees. From the second sub-block, the phase rotation may be performed with a value whose phase is increased by the offset value compared to the previous sub-block. In case that the number of OFDM symbols used for PDSCH transmission is 2 or more, the phase rotation may be performed in the same manner for all OFDM symbols to which the PDSCH is transmitted. It has the same sub-block structure for all OFDM symbols, and the phase values for each CDM group applied in sub-block units may also be the same.

The sub-block may be determined in units of PRG or units of multiple of PRG in order not to degrade reception performance. In the 5G NR mobile communication system, the PRG may be determined to be one of three values: wideband, 2 and 4. In the case of operating a PRG with wideband, sub-blocks cannot be divided, so it is off the table, and the unit of PRG may be 2 or 4. In this case, if the sub-blocks are set in units of 4-RBs, since they correspond to multiples of both PRGs 2 and 4, the PRG setting for each user may be set to one of 2 or 4 more freely.

In addition, if the phase value applied in units of sub-blocks for each CDM group is set to be a multiple of 90 degrees, implementation may be made easier. In Table 2, if A and B values are set to 0, $\Theta_1$ is set to 90 degrees, and $\Theta_2$ is set to 180 degrees, all applied phase values are determined as multiples of 90 degrees. In this case, when phase rotation is applied, there is an advantage in that it may be easily implemented only with relatively simple I/Q substitution and sign conversion operations instead of complex number multiplication operations.

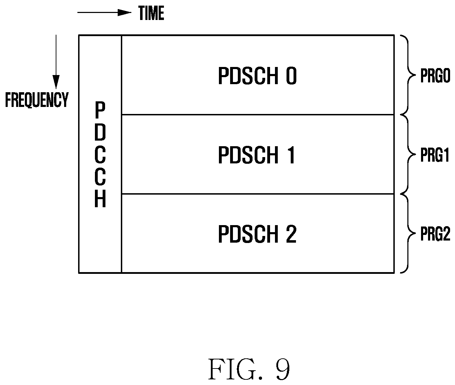

FIG. 9 is a diagram illustrating a case in which phase rotation is applied in sub-block units to a DMRS signal for a PDSCH in 4-layer transmission according to an embodiment of the present disclosure.

As illustrated in Table 2, phase offset $\Theta_1$ is applied to the second CDM group except for the first CDM group, the number of sub-blocks is 3, and the initial phase value A is 0. For the L2 and L3 layers to which two DMRS ports corresponding to the second CDM group are allocated, a phase value increasing by a phase offset is applied in sub-block units. In this case, as in the case of using different DMRS sequences used in FIG. 6, since the correlation is not high in each sub-block, an increase in PAPR may be effectively prevented. In case that A is set to 0, it is similar to the case of FIG. 4 in the sub-block 0 section, but it is applied only to some bandwidth, not the entire bandwidth. So the overall correlation is low, and thus a greater PAPR increase prevention effect may be obtained than when the PAPR reduction of the present disclosure is not applied.

Hereinafter, a method of applying phase rotation according to the present disclosure to a specific situation in which a PDSCH is transmitted will be described.

- Embodiment 1: In case that one PDSCH uses the entire resource in slot

An example of Table 2 may be applied. Since the entire frequency axis resource is divided into sub-blocks, phase rotation may be applied by applying the phase value to be applied in sub-block units to the layer corresponding to each CDM group. PAPR reduction processing may be performed on entire RE by repeating the same operation from the first OFDM symbol to the last OFDM symbol.

- Embodiment 2: In case that numerous PDSCHs becomes FDM

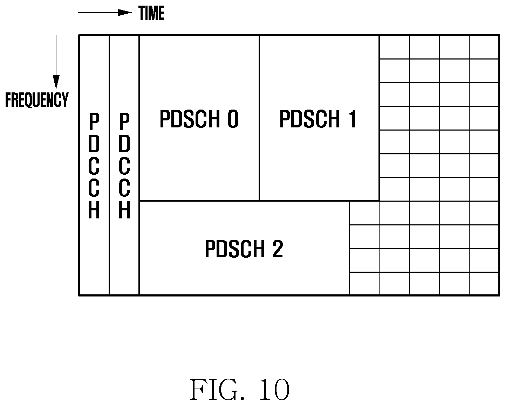

FIG. 10 is a diagram illustrating a case in which a number of PDSCHs are frequency division multiplexed (FDM) according to an embodiment of the present disclosure.
Referring to FIG. 10, three different PDSCHs from PDSCH 0 to PDSCH 2 correspond to three different PRGs from PRGs 0 to 2, respectively.
In this way, in case that several PDSCHs are allocated in units of PRGs, different DMRS sequences may be used for each PDSCH, but a method in which all PDSCHs commonly use the same DMRS sequence by using cell-specific variables is also possible. In the case of fronted-loaded DMRS, the OFDM symbol position where the DMRS signal is transmitted is likely to be the same, and in this case, since one DMRS sequence is allocated to the entire frequency band, it has the same DMRS mapping form as in Embodiment 1 in case that one PDSCH uses the entire resource in the slot. In this structure, if a method of giving different phases for each PDSCH is applied, implementation may be complicated because phase adjustment must be performed for entire PDSCH allocated within a slot. If a sub-block in which carrier bandwidth is pre-divided by unit of multiple of PRG is used, implementation may be more simplified by performing phase rotation by calculating only a phase value based on an RB position in the frequency axis regardless of the number of allocated PDSCHs.
In other words, even in this case, as in Embodiment 1, the example of Table 2 may be applied as it is. For example, in the case of DMRS configuration 1 (type 1), the CDM group may be divided into two, #0 (1st group in Table 2) and #1 (2nd group in Table 2). In case that the size of a sub-block is in PRG units, to PRG 0, phase A in case that the sub-block index is 0 may be applied, and to PRG 1, since the sub-block index corresponds to 1, phase $A+\Theta_1$ increased by 1 offset may be applied, and to PRG 2, phase $A+2\Theta_1$ may be applied to correspond to sub-block index 2.
Since the size of a sub-block may be determined by a multiple of PRG, in case that the size of a sub-block is twice as large as the PRG size, phase rotation may be applied to all REs by making PRG 0 and PRG 1 correspond to sub-block index 0 and PRG 2 correspond to sub-block index 1.

- Embodiment 3: mini-slot operation

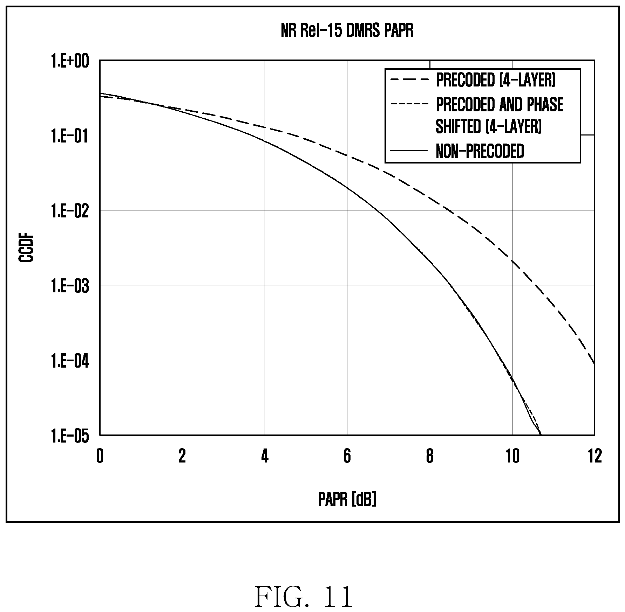

FIG. 11 is a diagram illustrating a case in which a mini-slot is applied in transmission of a PDSCH according to an embodiment of the present disclosure.
As illustrated in FIG. 11, in case that different PDSCHs are operated in units of time axis OFDM symbols, for the frequency axis, the example in Table 2 may be applied as it is. In the case of a 5G NR mobile communication system, two or more OFDM symbols are used when transmitting a PDSCH, and a symbol to which a DMRS signal transmitted is separately divided. Since the same phase should be applied to both the DMRS signal and the data signal so that performance degradation does not occur at the reception end, the same phase rotation method must be used in all OFDM symbol intervals in which the PDSCH is transmitted. By operating as a mini-slot, several PDSCHs may be allocated in a Time Division Multiplexing (TDM) method. Assuming that only PDSCHs 0 and 1 are used in the structure as illustrated in FIG. 11, different phase values may be applied to OFDM symbol intervals in which each PDSCH is transmitted. However, in order to apply different phase values for each OFDM symbol interval in which PDSCH is transmitted, the implementation will inevitably become more complicated. Referring to the structure that is transmitted to TDM+FDM including up to PDSCH 2, it may be seen that the same phase value should be used in all OFDM symbols even if the mini-slot is operated. Since the same phase value must be applied to the OFDM symbol interval in which PDSCH 2 is transmitted, different phases cannot be applied by dividing the OFDM symbol interval in which PDSCH 0 is transmitted and the OFDM symbol interval in which PDSCH 1 is transmitted. In other words, even in case that the mini-slot is applied, the example of Table 2 may be applied as it is in the same manner as in Embodiment 1.
The implementation method according to the present disclosure is not limited to the above embodiment, and various methods such as modification of the embodiment, combination between embodiments, and combination of modified embodiments, and the like may be applied.

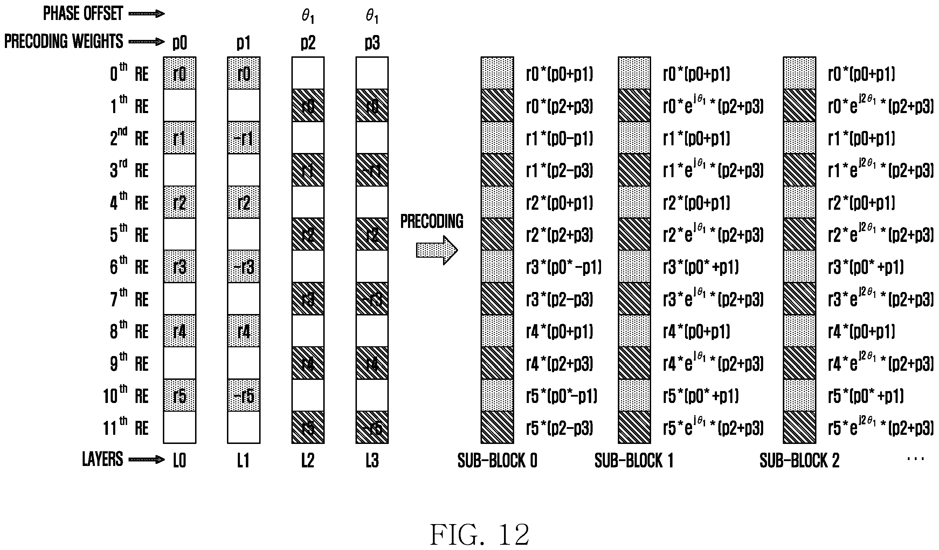

FIG. 12 is a diagram illustrating a simulation result in which a PAPR reduction technique according to the present disclosure is applied in a case of 4-layer transmission.

The solid line illustrates the PAPR value in case that precoding is not performed, and the thick dotted line illustrates the result of not applying any PAPR reduction technique after performing precoding. As described in FIG. 5, it may be confirmed that the PAPR increases by about 2dB based on a 0.01% probability through the precoding process. The thin dotted line is the result of applying the PAPR reduction technique proposed in this disclosure after performing precoding, and it shows almost the same result of the solid line without performing precoding. It may be seen that the PAPR increase that may occur due to precoding is effectively prevented by applying the method proposed in the present disclosure.

Although the operation of the base station has been mainly described in the present disclosure, in case of a terminal receiving an OFDM DMRS signal to which PAPR reduction according to the present disclosure is applied, an effect of performing smooth and efficient communication may be obtained by receiving a PDSCH-DMRS with reduced PAPR.

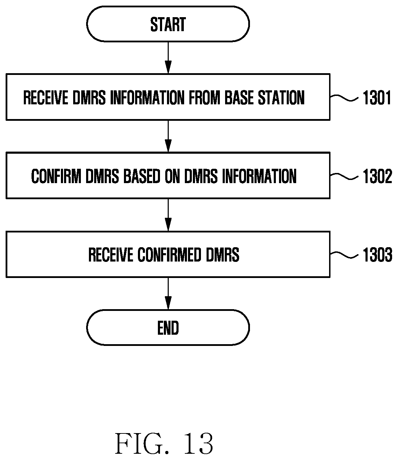

FIG. 13 is a flowchart illustrating a method for a terminal to receive an OFDM DMRS signal to which PAPR reduction is applied according to an embodiment of the present disclosure.

Referring to FIG. 13, the terminal may receive information for receiving a DMRS for a PDSCH from a base station 1301. DMRS information for PDSCH may include information such as DMRS configuration (DMRS type), port, CDM group, DMRS port grouping, OCC, maximum length of DMRS, DMRS table for receiving DMRS, and the like. At this time, the DMRS information received by the terminal from the base station may be received by higher layer signaling, L1 signaling, or a combination thereof.

Thereafter, the terminal may confirm the DMRS for the PDSCH to be received based on the received DMRS information 1302. For example, the terminal may confirm the DMRS for the PDSCH to be received by the terminal by confirming the number of DMRS ports (number of layers), the type of DMRS, CDM group, OCC information.

The terminal may receive the DMRS transmitted from the base station 1303. At this time, the terminal may receive the confirmed DMRS using the DMRS information received from the base station described above and the information confirmed by the terminal.

The DMRS received by the terminal may be a DMRS to which processing for reducing the PAPR from the base station is applied. At this time, a processing for reducing PAPR may be applying phase rotation. The method of generating the DMRS received by the terminal is the same as described above.

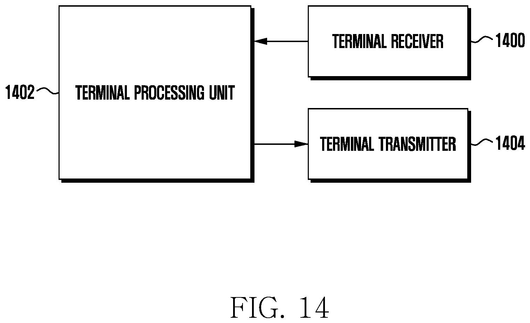

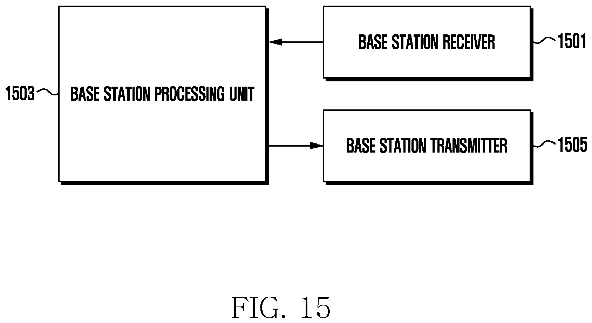

A transmitter, a receiver, and a processing unit of a terminal and a base station for performing the above embodiments of the present disclosure are illustrated in FIGS. 14 and 15, respectively. From the Embodiment 1 to the Embodiment 3, a method for generating DMRS information by a base station by performing PAPR reduction processing for DMRS transmission and a method for transmitting and receiving of the base station and the terminal are illustrated, and in order to perform this, the receiver, the processing unit, and the transmitter of the base station and the terminal must each operate according to the embodiment.

Specifically, FIG. 14 is a block diagram illustrating an internal structure of a terminal according to an embodiment of the present disclosure. As illustrated in FIG. 14, the terminal of the present disclosure may include a terminal receiver 1400, a terminal transmitter 1404, and a terminal processor 1402. The terminal receiver 1400 and the terminal transmitter 1404 may be collectively referred to as a transceiver in an embodiment of the present disclosure. The transceiver may transmit and receive a signal for communication with the base station. The signal may include control information and data. To this end, the transceiver may be configured with an RF transmitter for up-converting and amplifying the frequency of a transmitted signal, and an RF receiver for low-noise amplifying a received signal and down-converting its frequency. In addition, the transceiver may receive a signal through a wireless channel, output the signal to the terminal processing unit 1402, and transmit the signal output from the terminal processing unit 1402 through the wireless channel. The terminal processing unit 1402 may control a series of processes so that the terminal may operate according to an embodiment of the present disclosure described above. For example, the terminal receiver 1400 may receive a reference signal from the base station, and the terminal processing unit 1402 may control to interpret a method of applying the reference signal. In addition, the terminal transmitter 1404 may also transmit a reference signal.

FIG. 15 is a block diagram illustrating an internal structure of a base station according to an embodiment of the present disclosure. As illustrated in FIG. 15, the base station of the present disclosure may include a base station receiver 1501, a base station transmitter 1505, and a base station processing unit 1503. The base station receiver 1501 and the base station transmitter 1505 may be collectively referred to as a transceiver in an embodiment of the present disclosure. The transceiver may transmit and receive signals to and from the terminal. The signal may include control information and data. To this end, the transceiver may be configured with an RF transmitter for up-converting and amplifying the frequency of a transmitted signal, and an RF receiver for low-noise amplifying a received signal and down-converting its frequency. In addition, the transceiver may receive a signal through a wireless channel, output the signal to the base station processing unit 1503, and transmit the signal output from the base station processing unit 1503 through the wireless channel. The base station processing unit 1503 may control a series of processes so that the base station may operate according to an embodiment of the present disclosure described above. For example, the base station processing unit 1503 may determine the structure of the reference signal and control to generate information on the reference signal to be transmitted to the terminal. Thereafter, the base station transmitter 1505 may transmit the reference signal and related information to the terminal, and the base station receiver 1501 may also receive the reference signal.

On the other hand, the embodiments of the present disclosure disclosed in the present specification and drawings are only presented as specific examples to easily explain the technical content of the present disclosure and help understanding of the present disclosure, and are not intended to limit the scope of the present disclosure. In other words, it is obvious to those skilled in the art to which this disclosure belongs that other modified examples based on the technical idea of the present disclosure may be implemented. In addition, each of the above embodiments may be operated in combination with each other as necessary. For example, parts of all embodiments of the present disclosure may be combined with each other to operate a base station and a terminal.

In the present disclosure, expressions of '- or more' or '- or less' are used to determine whether a specific condition (or criterion) is fulfilled, but this is only a description to express an example and does not exclude a description of 'more than' or 'less than'. Conditions described as '- or more' may be replaced with 'more than', conditions described as '- or less' may be replaced with 'less than', and conditions described as '- or more and - or less' may be replaced with 'more than and less than'.

Methods according to the embodiments described in the claims or specification of the present disclosure may be implemented in the form of hardware, software, or a combination of hardware and software.

When implemented in software, a computer readable storage medium storing one or more programs (software modules) may be provided. One or more programs stored in a computer-readable storage medium are configured for execution by one or more processors in an electronic device. One or more programs may include instructions for causing an electronic device to execute methods according to embodiments described in the claims or specification of the present disclosure.

These programs (software modules, software) may be stored in random access memory, non-volatile memory including flash memory, Read Only Memory (ROM), Electrically Erasable Programmable Read Only Memory (EEPROM), magnetic disc storage device, Compact Disc-ROM (CD-ROM), Digital Versatile Discs (DVDs) or other forms of optical storage devices, or magnetic cassette. Alternatively, it may be stored in a memory configured with some or all combinations thereof. In addition, a plurality of each configuration memory may be included.

In addition, the program may be stored in an attachable storage device accessible through a communication network such as Internet, Intranet, Local Area Network (LAN), Wide LAN (WLAN), or Storage Area Network (SAN), or a communication network configured with a combination thereof. Such a storage device may be connected to a device performing an embodiment of the present disclosure through an external port. In addition, a separate storage device on the communication network may be connected to a device performing an embodiment of the present disclosure.

In the specific embodiments of the present disclosure described above, components included in the present disclosure are expressed in singular or plural numbers according to the specific embodiments presented. However, singular or plural expressions are selected appropriately for the presented situation for convenience of explanation, and the present disclosure is not limited to singular or plural components, and even if it is a component expressed in plural, it may be configured with singular, or even if it is a component expressed in singular, it may be configured with plural.

On the other hand, the embodiments of the present disclosure disclosed in the present specification and drawings are only presented as specific examples to easily explain the technical content of the present disclosure and help understanding of the present disclosure, and are not intended to limit the scope of the present disclosure. In other words, it is obvious to those skilled in the art to which this disclosure belongs that other modified examples based on the technical idea of the present disclosure may be implemented. In addition, one or more Embodiment 1 to Embodiment 3 may be combined and operated with each other as necessary. For example, a part of the methods proposed in the present disclosure may be combined with each other to operate the base station and the terminal. In addition, the above embodiments were presented based on 5G and NR systems, but other modified examples based on the technical idea of the above embodiment may be implemented in other systems such as LTE, LTE-A, LTE-A-Pro system.

**Claims**

1. A method of a base station in a wireless communication system comprising:

   identifying, layer information to which a physical downlink shared channel (PDSCH) for transmission to at least one terminal is mapped and code division multiplexing (CDM) group information;
   applying, based on the layer information and the CDM group information, a phase rotation to a demodulation reference signal (DMRS) for the PDSCH; and
   transmitting, to the at least one terminal, the DMRS to which the phase rotation is applied.

2. The method of claim 1, wherein the identifying the layer information and the CDM group information comprises:

identifying whether a number of layers to which the PDSCH is mapped is greater than or equal to two;
in case that the number of the layers is identified to be greater than or equal to two, identifying a number of CDM groups; and
in case that the number of the CDM groups is identified to be greater than or equal to two, applying the phase rotation to the DMRS.

3. The method of claim 1,

   wherein a plurality of the CDM group includes a first CDM group and a second CDM group, and
   wherein the phase rotation is not applied to the first CDM group and the phase rotation is applied to the second CDM group.

4. The method of claim 3, wherein the applying the phase rotation to the DMRS comprises:

   dividing a frequency resource region in which the PDSCH is transmitted into a plurality of sub-blocks;
   identifying different phase values for applying the phase rotation to each sub-block of the divided plurality of sub-blocks; and
   performing, based on the identified different phase values, a phase rotation on the DMRS for each sub-block of the divided plurality of sub-block of the second CDM group.

5. The method of claim 4, wherein a size of a sub-block of the plurality of sub-blocks is a multiple of size of a precoding resource block group (PRG) to which precoding is applied,

   wherein a phase rotation applied in a first orthogonal frequency division multiplexing (OFDM) symbol is applied to a second OFDM symbol, in case that the DMRS is transmitted in the first OFDM symbol and the second OFDM symbol, and
   wherein the different phase values are identified as multiples of a predetermined offset.

6. A method of a terminal in a wireless communication system comprising:

   receiving, from a base station, a demodulation reference signal (DMRS) information for a physical downlink shared channel (PDSCH);
   identifying, based on the received DMRS information, a DMRS to be received; and
   receiving, from the base station, the identified DMRS, and
   wherein the DMRS is configured to apply a phase rotation to each CDM group of a plurality of CDM groups, based on layer information to which the PDSCH is mapped and code division multiplexing (CDM) group information.

7. The method of claim 6, wherein the phase rotation is applied to the DMRS in case that it is identified that a number of layers to which the PDSCH is mapped is greater than or equal to two and a number of the CDM groups is greater than or equal to two based on the layer information and the CDM group information, and
   wherein the DMRS is configured to apply the phase rotation, based on different phase values for each sub-block of a plurality of sub-blocks divided in a frequency resource region in which the PDSCH is transmitted.

8. A base station in wireless communication system comprising:

   a transceiver for transmitting and receiving a signal; and
   a control unit connected to the transceiver, and
   wherein the control unit is configured to:

   identify, layer information to which a physical downlink shared channel (PDSCH) for transmission to at least one terminal is mapped and code division multiplexing (CDM) group information
   apply, based on the layer information and the CDM group information, a phase rotation to a demodulation reference signal (DMRS) for the PDSCH; and
   transmit, to the at least one terminal, the DMRS to which the phase rotation is applied.

9. The base station of claim 8, wherein the control unit is configured to:

identify, whether a number of layers to which the PDSCH is mapped is greater than or equal to;

in case that the number of the layer is identified to be greater than or equal to two, identify a number of CDM groups; and

apply, in case that the number of the CDM groups is identified to be greater than or equal to two, apply the phase rotation to the DMRS.

10. The base station of claim 8,

wherein a plurality of the CDM group includes a first CDM group and a second CDM group, and

wherein the phase rotation is not applied to the first CDM group and the phase rotation is applied to the second CDM group.

11. The base station of claim 10, wherein the control unit is configured to:

divide, a frequency resource region in which the PDSCH is transmitted into a plurality of sub-blocks;

identify, different phase values for applying the phase rotation to each sub-block of the divided plurality of sub-blocks; and

perform, based on the identified different phase values, a phase rotation on the DMRS for each sub-block of the divided plurality of sub-block of the second CDM group.

12. The base station of claim 11,

wherein a size of a sub-block of the plurality of sub-blocks is a multiple of size of a precoding resource block group (PRG) to which precoding is applied,

wherein a phase rotation applied in a first orthogonal frequency division multiplexing (OFDM) symbol is applied to a second OFDM symbol, in case that the DMRS is transmitted in the first OFDM symbol and the second OFDM symbol, and

wherein the different phase values are identified as multiples of a predetermined offset.

13. A terminal in wireless communication system comprising:

a transceiver for transmitting and receiving a signal; and
a control unit connected to the transceiver, and
wherein the control unit is configured to:

receive, from a base station, a demodulation reference signal (DMRS) information for a physical downlink shared channel (PDSCH);
identify, based on the received DMRS information, a DMRS to be received; and
receive, from the base station, the identified DMRS, and
wherein the DMRS is configured to apply a phase rotation to each CDM group of a plurality of CDM groups, based on layer information to which the PDSCH is mapped and code division multiplexing (CDM) group information.

14. The terminal of claim 13, the phase rotation is applied to the DMRS in case that it is identified that a number of layers to which the PDSCH is mapped is two or more and a number of the CDM groups is two or more based on the layer information and the CDM group information.

15. The terminal of claim 14, the DMRS is configured to apply the phase rotation, based on different phase values for each of a plurality of sub-block divided in a frequency resource region in which the PDSCH is transmitted.

ONE SLOT (110)

$N_{symb}^{slot,\mu}$ OFDM SYMBOLS

1 OFDM SYMBOL (102)

1 SUBCARRIER (103)

RESOURCE BLOCK $N_{sc}^{RB}$ SUBCARRIERS (104)

RESOURCE ELEMENT (101)

FREQUENCY

TIME

FIG. 1

1 SLOT = 14 OFDM SYMBOLS

1 RB
= 12 SUBCARRIERS

CONTROL REGION          DATA REGION

DMRS ～200

PDSCH ～210

PDCCH ～220

CSI-RS ～230

PTRS ～240

CSI-RS FOR
TRACKING ～250

FIG. 2

DMRS CONFIGURATION 1

DMRS CONFIGURATION 2

CDM GROUP #0

CDM GROUP #1

CDM GROUP #0

CDM GROUP #1

CDM GROUP #2

FIG. 3

FIG. 4

FIG. 5

FIG. 6

```
CODEWORDS
   │
   ▼
┌──────────┐     ┌──────────┐                    ┌──────────┐
│          │     │ MODULATION│                   │ RESOURCE │
│SCRAMBLING│────▶│  MAPPER  │──┐            ┌───▶│ ELEMENT  │──┐
│          │     │          │  │            │    │ MAPPING  │  │
└──────────┘     └──────────┘  │  ┌───────┐ │    └──────────┘  │
    710              720        └─▶│       │─┤        740       │
                                   │ LAYER │ │  LAYERS          │
CODEWORDS                          │MAPPING│ │                  │
   │             ┌──────────┐   ┌─▶│       │─┤    ┌──────────┐  │
   ▼             │ MODULATION│  │  └───────┘ │    │ RESOURCE │  │
┌──────────┐     │  MAPPER  │  │     730     └───▶│ ELEMENT  │──┤
│          │     │          │  │                  │ MAPPING  │  │
│SCRAMBLING│────▶│          │──┘                  │          │  │
│          │     │          │                     └──────────┘  │
└──────────┘     └──────────┘                          ▲        │
                                                       │        │
                                                 ┌──────────┐   │
                                                 │   DMRS   │   │
                                                 └──────────┘   │
```

```
                 ┌──────────┐       ┌──────────┐       ┌──────────┐
            ┌───▶│          │──┐ ┌──▶│          │──┐ ┌─▶│OFDM SIGNAL│──▶
            │    │   PAPR   │  │ │   │          │  │ │  │GENERATION │
            │    │REDUCTION │  │ │   │PRECODING │  │ │  └──────────┘
            │    │          │──┤─┘   │          │──┤─┘       770
            │    │          │  │     │          │  │
            └───▶│          │──┘ ┌──▶│          │──┘ ┌─▶│OFDM SIGNAL│──▶
                 └──────────┘    │   └──────────┘    │  │GENERATION │
                     750         │       760         │  └──────────┘
                                                     │
                                              ANTENNA PORTS
```

FIG. 7

START

CONFIRM LAYER INFORMATION AND CDM GROUP INFORMATION ～811

PERFORM PHASE ROTATION IN PDSCH-DMRS AND PDSCH ～812

TRANSMIT DMRS AND PDSCH ～813

END

FIG. 8A

START

821
LAYER NUMBER >= 2 — NO

YES

822
CDM GROUP NUMBER >= 2 — NO

YES

823
SELECT LAYER SIGNAL

824
FIRST CDM GROUP? — Yes

No

825
DIVIDE LAYER SIGNAL INTO SUB-BLOCK

826
SELECT PHASE VALUE BY SUB-BLOCK
(REFER TO CDM GROUP AND SUB-BLOCK INDEX)

827
PERFORM PHASE ROTATION FOR
ALL SUB-BLOCKS WITH SELECTED PHASE VALUE

828
NO — PROCESS ALL LAYERS?

YES

END

FIG. 8B

FIG. 9

FIG. 10

FIG. 11

PHASE OFFSET ⟶

PRECODING WEIGHTS ⟶  p0    p1    $\theta_1$    $\theta_1$
                                    p2    p3

| | L0 | L1 | L2 | L3 | | SUB-BLOCK 0 | SUB-BLOCK 1 | SUB-BLOCK 2 |
|---|---|---|---|---|---|---|---|---|
| $0^{th}$ RE | r0 | r0 | | | | r0*(p0+p1) | r0*(p0+p1) | r0*(p0+p1) |
| $1^{th}$ RE | | | r0 | r0 | | r0*(p2+p3) | r0*$e^{j\theta_1}$*(p2+p3) | r0*$e^{j2\theta_1}$*(p2+p3) |
| $2^{nd}$ RE | r1 | -r1 | | | | r1*(p0-p1) | r1*(p0+p1) | r1*(p0+p1) |
| $3^{rd}$ RE | | | r1 | -r1 | | r1*(p2-p3) | r1*$e^{j\theta_1}$*(p2+p3) | r1*$e^{j2\theta_1}$*(p2+p3) |
| $4^{th}$ RE | r2 | r2 | | | PRECODING | r2*(p0+p1) | r2*(p0+p1) | r2*(p0+p1) |
| $5^{th}$ RE | | | r2 | r2 | ⟹ | r2*(p2+p3) | r2*$e^{j\theta_1}$*(p2+p3) | r2*$e^{j2\theta_1}$*(p2+p3) |
| $6^{th}$ RE | r3 | -r3 | | | | r3*(p0*-p1) | r3*(p0*+p1) | r3*(p0*+p1) |
| $7^{th}$ RE | | | r3 | -r3 | | r3*(p2-p3) | r3*$e^{j\theta_1}$*(p2+p3) | r3*$e^{j2\theta_1}$*(p2+p3) |
| $8^{th}$ RE | r4 | r4 | | | | r4*(p0+p1) | r4*(p0+p1) | r4*(p0+p1) |
| $9^{th}$ RE | | | r4 | r4 | | r4*(p2+p3) | r4*$e^{j\theta_1}$*(p2+p3) | r4*$e^{j2\theta_1}$*(p2+p3) |
| $10^{th}$ RE | r5 | -r5 | | | | r5*(p0*-p1) | r5*(p0*+p1) | r5*(p0*+p1) |
| $11^{th}$ RE | | | r5 | r5 | | r5*(p2-p3) | r5*$e^{j\theta_1}$*(p2+p3) | r5*$e^{j2\theta_1}$*(p2+p3) |

LAYERS ⟶  L0    L1    L2    L3     SUB-BLOCK 0    SUB-BLOCK 1    SUB-BLOCK 2    ⋯

FIG. 12

START

RECEIVE DMRS INFORMATION FROM BASE STATION ~ 1301

CONFIRM DMRS BASED ON DMRS INFORMATION ~ 1302

RECEIVE CONFIRMED DMRS ~ 1303

END

FIG. 13

1402 ⌇ TERMINAL PROCESSING UNIT

TERMINAL RECEIVER ⌇ 1400

TERMINAL TRANSMITTER ⌇ 1404

FIG. 14

FIG. 15

**EP 4 164 188 A1**

## INTERNATIONAL SEARCH REPORT

| International application No. |
|---|
| **PCT/KR2021/008550** |

**A. CLASSIFICATION OF SUBJECT MATTER**

**H04L 27/26**(2006.01)i; **H04L 25/03**(2006.01)i; **H04L 5/00**(2006.01)i

According to International Patent Classification (IPC) or to both national classification and IPC

**B. FIELDS SEARCHED**

Minimum documentation searched (classification system followed by classification symbols)

H04L 27/26(2006.01); H04B 7/04(2006.01); H04B 7/06(2006.01); H04B 7/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PDSCH, 레이어(layer), CDM 그룹(group), DMRS, 위상 회전(phase rotation)

**C. DOCUMENTS CONSIDERED TO BE RELEVANT**

| Category* | Citation of document, with indication, where appropriate, of the relevant passages | Relevant to claim No. |
|---|---|---|
| X | WO 2019-199213 A1 (TELEFONAKTIEBOLAGET LM ERICSSON (PUBL)) 17 October 2019 (2019-10-17) See page 3, line 81; page 4, lines 106-109; page 8, line 258 - page 9, line 271; page 10, lines 311-315; page 11, lines 324-333; page 12, lines 349-350; page 15, lines 413-420; and page 26, lines 765-769 and figure 1. | 1-3,6,8-10,13-14 |
| Y | | 4,7,11,15 |
| A | | 5,12 |
| Y | SPREADTRUM COMMUNICATIONS. Discussion on power imbalance issue for DMRS. R1-1904783, 3GPP TSG RAN WG1 #96bis. Xi'an, China. 29 March 2019. See pages 1-4. | 4,7,11,15 |
| A | ERICSSON. Feature lead summary of low PAPR RS. R1-1901293, 3GPP TSG RAN WG1 #AH 1901. Taipei, Taiwan. 22 January 2019. See pages 1-21. | 1-15 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 September 2021** | **14 September 2021** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2021/008550** |

**C.    DOCUMENTS CONSIDERED TO BE RELEVANT**

| Category* | Citation of document, with indication, where appropriate, of the relevant passages | Relevant to claim No. |
|---|---|---|
| A | VIVO. Discussion on remaining issues low PAPR RS. R1-1900140, 3GPP TSG RAN WG1 #AH 1901. Taipei, Taiwan. 12 January 2019.<br>    See pages 1-12. | 1-15 |
| A | WO 2011-140262 A1 (QUALCOMM INCORPORATED) 10 November 2011 (2011-11-10)<br>    See paragraphs [0063]-[0079] and figure 9. | 1-15 |

Form PCT/ISA/210 (second sheet) (July 2019)

INTERNATIONAL SEARCH REPORT
Information on patent family members

International application No.

**PCT/KR2021/008550**

| Patent document cited in search report | | | Publication date (day/month/year) | Patent family member(s) | | | Publication date (day/month/year) |
|---|---|---|---|---|---|---|---|
| WO | 2019-199213 | A1 | 17 October 2019 | CN | 112005504 | A | 27 November 2020 |
| | | | | EP | 3776895 | A1 | 17 February 2021 |
| | | | | US | 2021-0160027 | A1 | 27 May 2021 |
| WO | 2011-140262 | A1 | 10 November 2011 | CN | 102870344 | A | 09 January 2013 |
| | | | | CN | 102870344 | B | 27 April 2016 |
| | | | | CN | 104320172 | A | 28 January 2015 |
| | | | | CN | 104320172 | B | 06 July 2018 |
| | | | | EP | 2567466 | A1 | 13 March 2013 |
| | | | | EP | 2567466 | B1 | 15 January 2020 |
| | | | | JP | 2013-530603 | A | 25 July 2013 |
| | | | | JP | 5635183 | B2 | 03 December 2014 |
| | | | | KR | 10-1517435 | B1 | 04 May 2015 |
| | | | | KR | 10-1690150 | B1 | 27 December 2016 |
| | | | | KR | 10-2013-0040903 | A | 24 April 2013 |
| | | | | KR | 10-2014-0084323 | A | 04 July 2014 |
| | | | | US | 2012-0106595 | A1 | 03 May 2012 |
| | | | | US | 2018-0091206 | A1 | 29 March 2018 |
| | | | | US | 9887754 | B2 | 06 February 2018 |

Form PCT/ISA/210 (patent family annex) (July 2019)